# FASCICULE DE BREVET EUROPEEN

(11) **EP 1 047 570 B1**
(45) Date de publication et mention de la délivrance du brevet: **09.10.2002**
(21) Numéro de dépôt: 99931358.8
(22) Date de dépôt: 16.07.1999
(51) Int. Cl.: B60J 10/00

(54) **DISPOSITIF POUR LA POSE D'UN JOINT SUR UNE CARROSSERIE DE VEHICULE ET SON PROCEDE DE MISE EN OEUVRE**
VORRICHTUNG ZUM ANBRINGEN VON DICHTUNGEN AUF EINER FAHRZEUGKAROSSERIE UND BETRIEBSVERFAHREN HIERFÜR
DEVICE FOR FIXING A JOINT ON A MOTOR VEHICLE BODY AND METHOD USING SAME

(30) Priorité: 21.07.1998 FR 9809291
(43) Date de publication de la demande: 02.11.2000
(73) Titulaire: Process Conception Ingenierie S.A., 92190 Meudon (FR); Technorop Automation, 44980 Sainte Luce sur Loire (FR)
(72) Inventeur: CUEFF, Jean-Yves, F-91320 Wissous (FR); DE BENTZMANN, Alain, F-78000 Versailles (FR); ROUSSE, Jean-Paul, F-44300 Nantes (FR)
(74) Mandataire: Bentz, Jean-Paul
(86) Numéro de dépôt international: FR9901752
(87) Numéro de publication internationale: WO00005086

(56) Documents cités:
- DE-A- 3 638 176
- FR-A- 2 646 370
- US-A- 4 653 166

## Description

La présente invention a essentiellement pour objet un dispositif pour la pose d'un joint, tel qu'un joint de jet d'eau, sur une carrosserie de véhicule automobile.

Elle vise également un procédé de mise en oeuvre de ce dispositif.

L'expression «joint de jet d'eau» ou «joint de gouttière» désigne un joint destiné à être placé sur la carrosserie du véhicule au niveau de la partie supérieure de l'encadrement de porte et servant d'une part à éviter que l'eau ne ruisselle le long de la vitre ou ne pénètre à l'intérieur de l'habitacle et, d'autre part, à limiter les bruits aérodynamiques.

Jusqu'à présent, il n'a pas été proposé un dispositif et un procédé de fixation par collage d'un joint de jet d'eau sur une carrosserie de véhicule automobile, qui soient parfaitement automatisés et fiables notamment au regard du positionnement du joint sur le véhicule, de l'effort de mise en pression du joint sur la surface correspondante de la carrosserie, et de l'opération elle-même de fixation par collage du joint sur la surface réceptrice de la carrosserie, cette opération étant bien souvent imparfaite et conduisant à la longue à un décollement du joint de la carrosserie.

Aussi, la présente invention a pour but de combler cette lacune.

A cet effet, l'invention a pour objet un dispositif pour la pose d'un joint, tel qu'un joint de jet d'eau, sur une carrosserie de véhicule automobile, caractérisé en ce qu'il comprend essentiellement : un gabarit apte à être mis en contact avec la carrosserie du véhicule ; un chariot porté par le gabarit et apte à se déplacer sur celui-ci pour assurer la mise en place du joint ; et des moyens de guidage et d'orientation du chariot sur le gabarit.

Suivant une réalisation préférée, les moyens de guidage et d'orientation du chariot comprennent trois rails approximativement parallèles ou non, de section transversale circulaire et qui sont solidaires du gabarit, à savoir : un premier rail de forme conjuguée de la forme de la surface réceptrice du joint sur le véhicule et définissant la trajectoire que doit suivre le chariot le long de la carrosserie du véhicule, un deuxième rail maintenant l'effort d'application du joint sur sa surface réceptrice suivant une direction toujours normale à la surface d'application du joint ; et un troisième rail assurant, suivant une direction transversale au véhicule, un positionnement correct du chariot par rapport au véhicule pour que le joint affleure parfaitement avec la géométrie de la carrosserie.

Suivant un autre mode de réalisation du dispositif de cette invention, le chariot comporte des galets de guidage qui coopèrent bilatéralement avec respectivement le premier, le deuxième et le troisième rails, les axes des galets coopérant avec le premier rail étant orthogonaux à l'axe des galets coopérant avec le deuxième rail, et les axes des galets coopérant avec le troisième rail formant un angle (A) avec les axes des galets coopérant avec le deuxième rail.

Suivant encore une autre caractéristique de ce dispositif, le chariot précité se compose de deux éléments, à savoir un premier élément portant les galets associés au premier et au deuxième rails, et un deuxième élément portant les galets associés au troisième rail et incliné par rapport au premier élément suivant un angle égal à l'angle (A) précité.

On précisera ici que le deuxième élément précité est muni d'un galet d'application du joint sur la surface réceptrice, l'axe de ce galet étant orthogonal à l'axe des galets associés au troisième rail.

Suivant un mode de réalisation préféré, le galet d'application du joint possède une gorge coopérant avec le joint pour assurer son application et son positionnement sur la surface réceptrice et est entraîné en rotation par un moteur solidaire du chariot.

Suivant encore un autre mode de réalisation de l'invention, le galet d'application précité est monté sur une pièce actionnable par un vérin ou analogue solidaire du chariot pour ainsi exercer un effort d'application maîtrisé du joint sur la surface réceptrice.

On précisera encore ici qu'au gabarit est associée une butée suspendue et réglable apte à coopérer avec la carrosserie du véhicule pour assurer le prépositionnement correct du gabarit sur ladite carrosserie et, éventuellement, son entraînement.

Le gabarit est monté suspendu et roulant sur un rail par l'intermédiaire de bras dont l'un porte la butée précitée.

Selon un autre mode de réalisation de l'invention, le gabarit est maintenu accroché sur la carrosserie grâce à des pattes coopérant avec le pavillon de ladite carrosserie.

Le gabarit est encore muni d'un moteur d'entraînement du chariot par l'intermédiaire d'une chaîne ou analogue.

L'invention a encore pour objet un procédé de mise en oeuvre d'un dispositif répondant aux caractéristiques ci-dessus, et qui est essentiellement caractérisé en ce que lorsque la butée précitée a heurté une extrémité de la carrosserie, le gabarit est plaqué et bridé sur le côté de la carrosserie, et le chariot précité est mis en mouvement sur le gabarit, tandis qu'une pression est exercée sur le galet d'application précité pour fixer le joint par collage sur la surface réceptrice.

Selon un autre mode de réalisation de ce procédé, le galet d'application précité tourne plus vite qu'un simple roulage libre de ce galet sur le joint.

Ainsi, au lieu d'utiliser un galet à roulage libre sur le joint qui provoquerait non seulement la mise en pression du joint mais aussi un allongement conséquent de celui-ci par l'effort important écrasant la semelle du joint, de sorte que le joint risquerait de se rétracter ultérieurement et par conséquent de se décoller en certains endroits de la carrosserie, on réalise avantageusement, en faisant tourner le galet légèrement plus vite qu'un simple roulage libre, un frottement entre le galet et le joint et donc une compression dans le sens longitudinal du joint qui réduit ou annule l'allongement ci-dessus et assure, même à la longue, que le joint ne risque pas de se détacher de la carrosserie du véhicule.

Mais d'autres avantages et caractéristiques de l'invention apparaîtront mieux dans la description détaillée qui suit et se réfère aux dessins annexés, donnés uniquement à titre d'exemple, et dans lesquels :
La figure 1 est une vue en élévation de côté et schématique d'un dispositif selon cette invention en position appliquée sur le côté de la carrosserie d'un véhicule.
La figure 2 est une vue de face de ce dispositif, chariot enlevé pour plus de clarté, suivant la flèche II de la figure 1.
La figure 3 est une demi-vue partielle et très schématique de la carrosserie, faite transversalement à l'axe longitudinal médian du véhicule, et illustrant l'accrochage du gabarit sur le véhicule.
La figure 4 illustre en coupe le chariot, suivant la ligne IV-IV de la figure 2, bien que ledit chariot ne soit pas représenté sur cette dernière figure.
La figure 5 est une vue de côté avec coupes partielles de la partie du chariot comportant le galet d'application du joint et le mécanisme d'entraînement de ce galet.
La figure 6 est une vue similaire à la figure 5, mais suivant la flèche VI de cette figure 5.

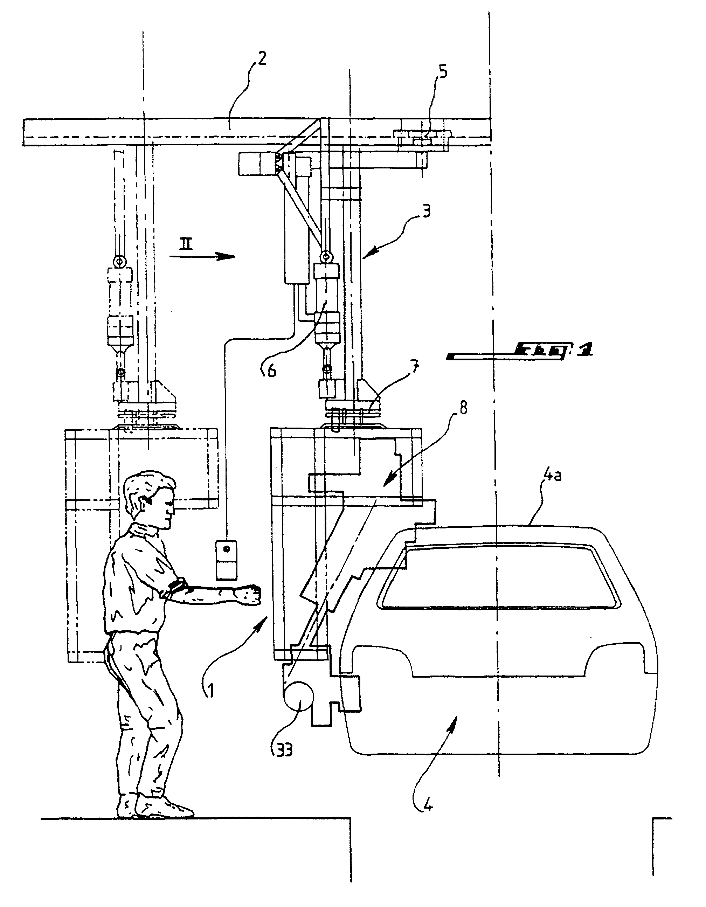

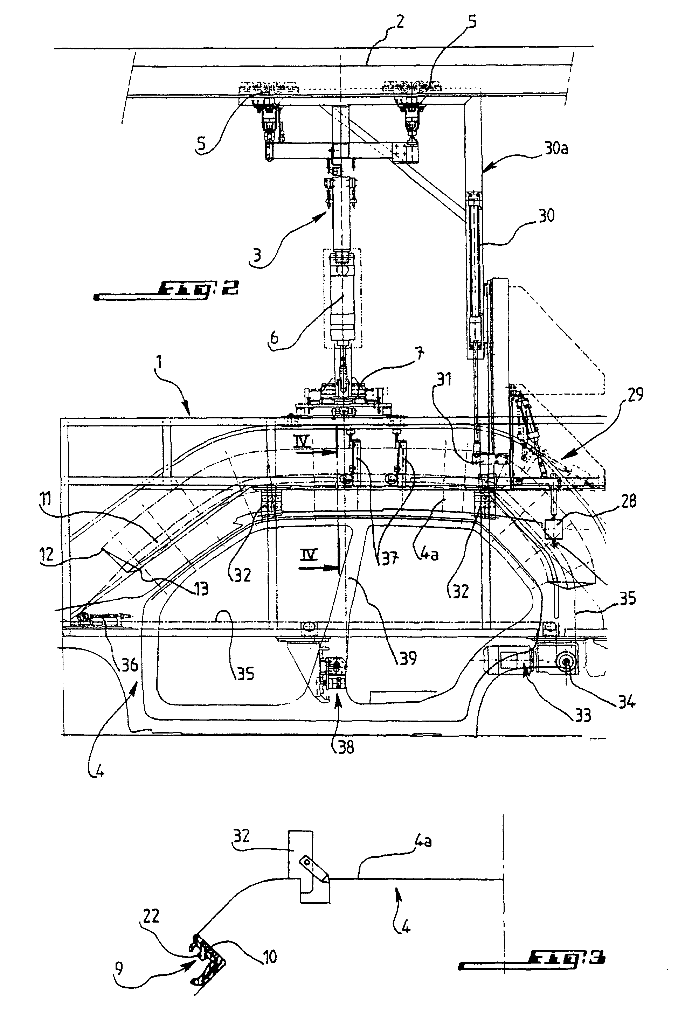

Un dispositif de pose d'un joint suivant cette invention, et comme on le voit notamment sur les figures 1 et 2, comprend essentiellement un gabarit 1 présentant grossièrement la forme d'un cadre ou bâti mécano-soudé, monté suspendu et roulant sur un rail 2 par l'intermédiaire d'un bras ou analogue 3, de façon à pouvoir être appliqué sur le côté de la carrosserie 4 d'un véhicule automobile. Comme on le verra plus loin, le dispositif de l'invention peut être utilisé aussi bien si le véhicule est fixe au poste de travail que s'il est en mouvement continu sur la ligne d'assemblage.

On a montré en 5 des galets de roulement du dispositif sur le rail 2, en 6 un vérin équilibreur interposé sur le bras 3 et évitant une surcharge du dispositif sur la carrosserie 4, et en 7 un système d'accrochage avec amortissement du bras 3 sur le gabarit 1.

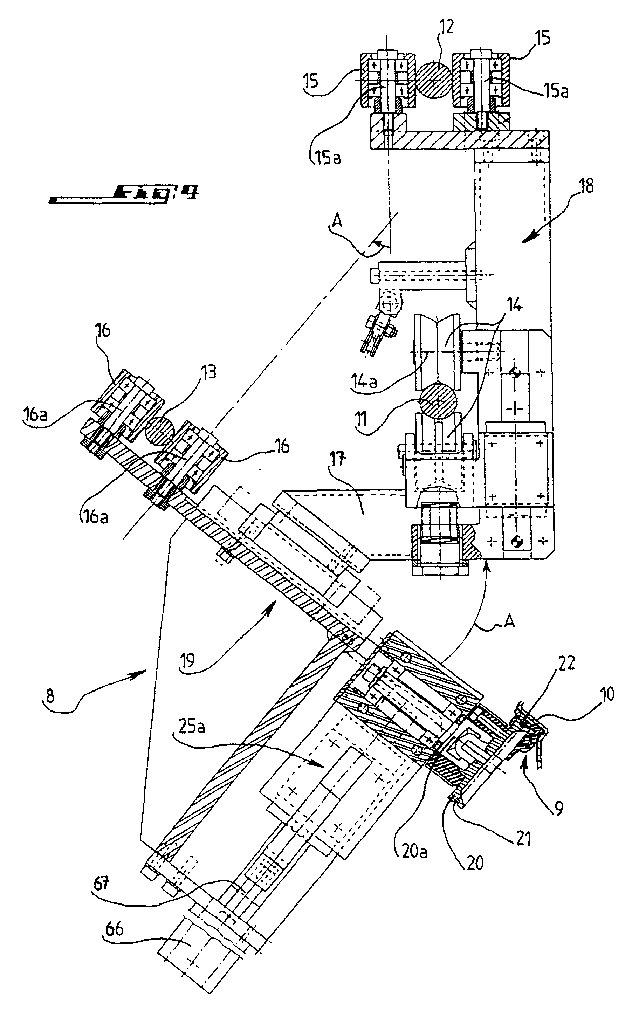

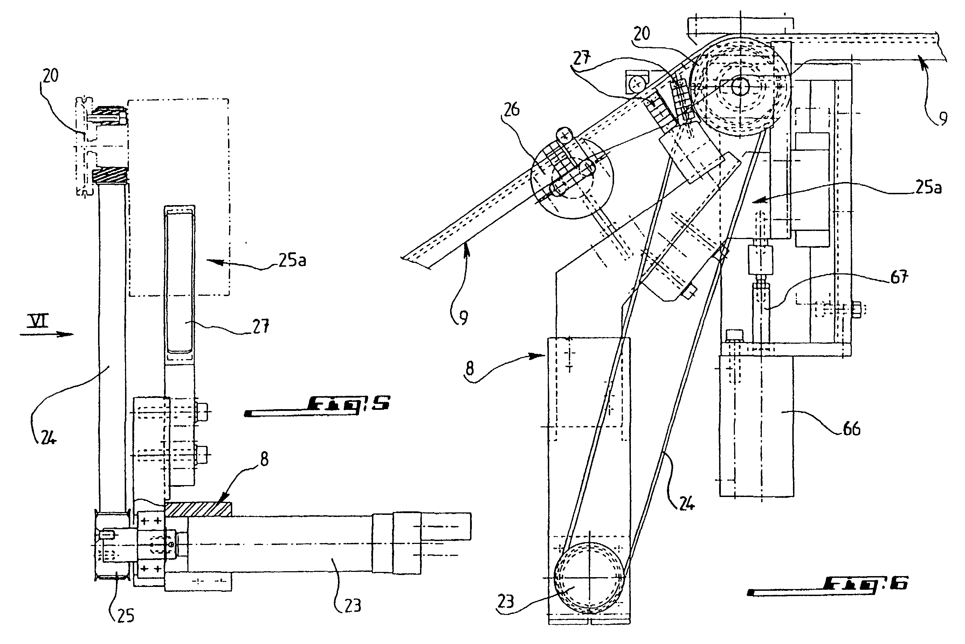

Sur le gabarit 1 est monté roulant, par rapport audit gabarit, un chariot représenté schématiquement en 8 sur la figure 1, et bien visible sur la figure 4, ce chariot 8 assurant la mise en place du joint repéré 9 sur les figures 3, 4 et 6 sur une surface réceptrice de la carrosserie 4, laquelle surface est montrée en 10 sur les figures 3 et 4.

Le chariot 8 est guidé et orienté sur le gabarit 1 par un certain nombre de moyens qui seront décrits en détail ci-après, étant bien entendu que la forme de ces moyens et du gabarit 1 correspond à un type donné de véhicule ou bien à des versions différentes d'un même modèle de véhicule ayant des parties semblables.

Comme il apparaît clairement sur les figures 2 et 4, le gabarit 1 comprend trois rails de guidage du chariot 3, lesquels rails peuvent être approximativement parallèles ou non en fonction de la géométrie de la carrosserie et présentent, en section transversale, une forme circulaire, et à savoir :
- un premier rail 11 ayant une forme conjuguée de la forme de la surface réceptrice 10 et définissant la trajectoire que doit suivre le chariot 8 le long de la carrosserie 4 du véhicule ;
- un deuxième rail 12 qui sert à maintenir l'effort d'application du joint 9 sur la surface réceptrice 10, et cela suivant une direction toujours normale à la surface d'application dudit joint sur ladite surface ; et
- un troisième rail 13 qui assure, suivant une direction transversale au véhicule, un positionnement correct du chariot 8 par rapport au véhicule pour que le joint 9 affleure parfaitement avec la géométrie du côté d'habitacle du véhicule.

Sur la figure 4, on voit que le chariot 8 comporte des galets de guidage coopérant bilatéralement avec respectivement les trois rails 11, 12 et 13.

Plus précisément, les galets de guidage bilatéraux 14 coopérant avec le premier rail 11 ont leurs axes 14a orthogonaux à l'axe 15a des galets de guidage bilatéraux 15 coopérant avec le deuxième rail 12.

Quant aux galets de guidage bilatéraux 16 coopérant avec le troisième rail 13, leurs axes 16a forment un angle A avec les axes 15a des galets 15 coopérant avec le deuxième rail 12, cet angle A étant dans l'exemple décrit ici, d'environ 40°.

Comme cela est encore bien visible sur la figure 4, le chariot 8 se compose de deux éléments réunis par un bras ou analogue 17, à savoir :
- un premier élément vertical 18 qui porte les galets bilatéraux 14 et 15 associés respectivement au premier rail 11 et au deuxième rail 12, et
- un deuxième élément 19 portant les galets bilatéraux 16 associés au troisième rail 13. Cet élément 19 est incliné par rapport au premier élément 18 suivant un angle A, qui est évidemment le même angle que l'angle formé entre les axes 16a des galets 15 associés au troisième rail 13 et les axes 15a des galets 15 associés au deuxième rail 12.

On observera encore ici que, conformément à l'invention, le deuxième élément incliné 19 du chariot 8 est équipé d'un galet 20 d'application du joint 9 sur la surface réceptrice 10 de la carrosserie 4 du véhicule.

L'axe 20a de ce galet est orthogonal à l'axe 16a des galets de guidage bilatéraux 16 coopérant avec le troisième rail 13 de façon à assurer, suivant une direction transversale au véhicule, un positionnement correct du chariot pour que le joint 9 affleure parfaitement avec la géométrie du véhicule.

On précisera ici que le deuxième élément ou élément inférieur 19 du chariot 8 est mobile en translation, par rapport au premier élément 18, suivant une direction faisant, avec le premier élément, un angle égal à l'angle d'inclinaison du deuxième élément par rapport au premier. Cette translation est provoquée par les variations de géométrie du troisième rail 13 lors du déplacement du chariot et assure que le joint se trouve toujours au droit de la surface réceptrice 10, donc affleure toujours parfaitement avec la géométrie du côté d'habitacle.

Le galet d'application 20 possède une gorge 21 dans laquelle pénètre une partie 22 du joint 9 de façon à ce que ledit joint soit correctement maintenu, appliqué et guidé ou positionné transversalement sur la surface réceptrice 10 suivant une direction toujours normale à la surface sur laquelle est appliqué le joint.

Le galet 20 d'application du joint 9 sur la surface réceptrice 10 est, conformément à un mode de réalisation de l'invention, entraîné en rotation par un moteur visible en 23 sur les figures 5 et 6, et cela à une vitesse qui est légèrement plus grande que celle d'un simple roulage libre du chariot 8 sur le gabarit 1, comme on l'expliquera en détail plus loin.

Sur les figures 5 et 6, on voit encore que le moteur 23, qui peut être un moteur du type pneumatique, entraîne en rotation le galet 20 par l'intermédiaire d'une courroie 24 montée entre ledit galet et un pignon ou analogue 25 calé sur l'arbre de sortie du moteur 23.

De plus, le galet 20 est monté sur une pièce 25a actionnable par un vérin 66 dont on voit la tige en 67, ce vérin 66 étant bien entendu solidaire du chariot 8 et permettant ainsi d'exercer, par l'intermédiaire du galet 20, un effort d'application du joint 9 sur la surface réceptrice 10.

Le joint 9, comme on le voit bien sur les figures 3 et 4, présente en section transversale sensiblement la forme d'un L, et on voit sur la figure 6, en allant de la gauche vers la droite de cette figure, que ce joint, avant d'être posé sur la surface réceptrice 10, est orienté par un moyen 26 solidaire du chariot 8, lequel chariot comporte également des doigts 27 permettant d'écarter à la position correcte les deux branches ou lèvres du joint, ce après quoi le joint 9 est reçu dans la gorge 21 du galet 20 pour pouvoir être posé et appliqué sur la surface réceptrice, comme on le voit sur la partie supérieure droite de la figure 6.

Revenant à la figure 2, on voit que le gabarit 1 est muni d'une butée 28 suspendue et réglable apte à coopérer avec la carrosserie 4 du véhicule pour assurer le positionnement correct du gabarit 1 sur ladite carrosserie, comme on le décrira en détail plus loin. Cette butée 28 est solidaire d'un équipage 29 permettant tant son basculement que sa montée ou sa descente verticale, par le fait que ladite butée 28 est portée par un ensemble relié en 31 à un vérin 30, lui-même porté par un bras 30a, ce vérin permettant de relever la butée 28 et son support lorsque le gabarit retourne à sa position initiale entre deux véhicules consécutifs. On observera que le bras 30a est sensiblement parallèle au bras 3 supportant le gabarit 1.

On a montré schématiquement sur la figure 3 des pattes 32 solidaires du gabarit 1 et permettant l'accrochage de celui-ci sur le pavillon 4a de la carrosserie 4 du véhicule lorsque ledit gabarit a été appliqué et positionné sur le côté de la carrosserie, comme on le voit sur la figure 2. Bien entendu, on ne sortirait pas du cadre de l'invention en utilisant d'autres moyens d'accrochage du gabarit 1 sur la carrosserie 4 du véhicule.

Sur la figure 2, on a montré en 33 un moteur d'entraînement du chariot 8 (non représenté sur cette figure pour plus de clarté), et dont l'arbre de sortie 34 entraine une chaîne, courroie ou analogue 35 positivement reliée au chariot 8 et passant autour d'un.moyen tendeur 36.

On voit encore sur la figure 2 des moyens 37 de réglage des rails 11, 12, 13, les pattes précitées 32 d'accrochage du gabarit 1 sur le pavillon 4a de la carrosserie, et des moyens 38 de positionnement et de blocage du gabarit 1 au niveau du pied milieu 39 de la carrosserie 4, et cela suivant une direction parallèle à l'axe longitudinal médian de la carrosserie 4.

Ayant ainsi décrit le dispositif selon cette invention, on en décrira maintenant la mise en oeuvre.

Comme on le voit sur la figure 1, l'opérateur, à l'aide d'une télécommande, met à la position de départ le dispositif, c'est-à-dire essentiellement l'ensemble gabarit-chariot.

La butée 28 est abaissée et mise dans la position active visible sur la figure 2.

La carrosserie 4, qui est sur une chaîne de fabrication, se déplace en continu de la gauche vers la droite de la figure 2, jusqu'à heurter, par sa partie arrière, la butée 28.

La carrosserie 4 entraîne alors le gabarit 1 avec son chariot associé, et l'opérateur le plaque, suivant une direction transversale au véhicule, le long de la carrosserie en appliquant une butée de centrage, qui constitue les moyens de positionnement 38 précités, sur un élément de carrosserie solidaire de la surface réceptrice du joint. Ainsi, le gabarit est auto-centré par rapport à un axe transversal du véhicule. Dans un deuxième temps, l'opérateur autorise une descente verticale du gabarit 1 par l'intermédiaire du vérin équilibreur 6, ce qui permet la mise en place des pattes d'accrochage 32 visibles sur la figure 3. Ce mouvement est rendu possible par une mobilité relative de la butée de centrage 38 par rapport au gabarit 1 uniquement suivant une direction verticale. Le gabarit étant maintenant parfaitement positionné et référencé par rapport à la carrosserie 4, les éléments 32 et 38 assurent son bridage sur cette dernière.

Il est à noter que, préalablement à toutes les opérations ci-dessus, le joint 9 a été inséré par son extrémité dans le chariot 8, le reste du joint étant disposé librement dans une goulotte de maintien (non représentée).

L'opérateur peut donc maintenant déclencher le cycle de positionnement et de mise en pression du joint 9, cela à l'aide du vérin 66 exerçant une pression sur le galet 20 qui assure la fixation du joint 9 par collage sur la surface réceptrice 10, puis grâce au mouvement relatif du chariot 8 par rapport au gabarit 1, le joint 9 est fixé sur ladite surface réceptrice.

On observera ici que le joint 9 est, de préférence, un joint du type auto-collant muni d'une pellicule de protection qui est bien entendu enlevée avant positionnement du galet d'application 20 sur la surface réceptrice.

A la fin du cycle, c'est-à-dire lorsque le chariot 8, avec son galet associé 20, aura appliqué le joint 9 sur toute la longueur de la surface réceptrice, l'opérateur retire le gabarit 1, en l'écartant de la carrosserie du véhicule, la butée 28 se désolidarisant de ladite carrosserie.

Il est important d'observer ici que, suivant un mode préférentiel de réalisation de l'invention, le galet 20 d'application du joint 9 sur la surface réceptrice 10 est soumis à un couple de rotation tendant à le faire tourner plus vite qu'un simple roulage libre dudit galet sur le joint. Ceci est avantageusement réalisé par la motorisation du galet 20 à l'aide du moteur 23, ce qui provoque une compression du joint dans le sens longitudinal qui réduit voire annule l'allongement du joint en fonction des besoins et évite le risque qu'il se décolle de la surface réceptrice, à la longue, dans certains endroits délicats tels que les arrondis de cette dernière.

En effet, comme il a été expliqué au début de cette description, lorsqu'on pose le joint à la main ou par roulement libre d'un galet, il se produit au niveau du galet une compression du joint qui provoque un allongement de celui-ci, ce qui risque de provoquer les inconvénients ci-dessus, lesquels sont avantageusement évités par la présente invention grâce à la motorisation du galet d'application 20.

Non seulement les contraintes du décollement ci-dessus sont supprimées, mais la fixation est très fiable du fait de la pression de collage importante, et on supprime avantageusement le chauffage du joint et du véhicule. Toute dilatation du joint, et donc tout refroidissement éventuel risquant de provoquer un retrait intempestif du joint, est avantageusement évitée.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

1. Dispositif pour la pose d'un joint, tel qu'un joint de jet d'eau, sur une carrosserie de véhicule automobile, **caractérisé en ce qu'**il comprend :
- un gabarit (1) apte à être mis en contact avec la carrosserie (4) du véhicule ;
- un chariot (8) porté par le gabarit (1) et apte à se déplacer sur celui-ci pour assurer la mise en place du joint (9) ; et
- des moyens de guidage et d'orientation du chariot (8) sur le gabarit (1).

2. Dispositif selon la revendication 1, **caractérisé en ce que** les moyens de guidage et d'orientation du chariot comprennent trois rails approximativement parallèles ou non, de section transversale circulaire et qui sont solidaires du gabarit (1), à savoir un premier rail (11) de forme conjuguée de la forme de la surface réceptrice (10 du joint et définissant la trajectoire que doit suivre le chariot (8) le long de la carrosserie (4) du véhicule, un deuxième rail (12) maintenant l'effort d'application du joint (9) sur la surface réceptrice (10) du joint suivant une direction toujours normale à la surface d'application du joint, et un troisième rail (13) assurant, suivant une direction transversale au véhicule, un positionnement correct du chariot (8) par rapport au véhicule pour que le joint (9) affleure parfaitement avec la géométrie de la carrosserie.

3. Dispositif selon la revendication 1 ou 2, **caractérisé en ce que** le chariot (8) comporte des galets de guidage (14, 15, 16) qui coopèrent bilatéralement avec respectivement le premier, le deuxième et le troisième rails (11, 12, 13), les axes (14a) des galets (14) coopérant avec le premier rail (11) étant orthogonaux à l'axe (15a) des galets (15) coopérant avec le deuxième rail (12), et les axes (16a) des galets (16) coopérant avec le troisième rail (13) formant un angle (A) avec les axes (15a) des galets (15) coopérant avec le deuxième rail (12).

4. Dispositif selon la revendication 1, 2 ou 3, **caractérisé en ce que** le chariot précité (8) se compose de deux éléments, à savoir un premier élément (18) portant les galets (14, 15) associés au premier et au deuxième rails (11, 12) et un deuxième élément (19) portant les galets (16) associés au troisième rail (13) et incliné par rapport au premier élément (18) suivant un angle égal à l'angle (A) précité.

5. Dispositif selon la revendication 4, **caractérisé en ce que** le deuxième élément précité (19) est muni d'un galet (20) d'application du joint (9) sur la surface réceptrice (10), l'axe (20a) de ce galet étant orthogonal à l'axe (16a) des galets (16) associés au troisième rail (13).

6. Dispositif selon la revendication 5, **caractérisé en ce que** le galet d'application précité (20) possède une gorge (21) coopérant avec le joint (9) pour assurer son application sur la surface réceptrice (10) et est entraîné en rotation par un moteur (23) solidaire du chariot (8).

7. Dispositif selon la revendication 5 ou 6, **caractérisé en ce que** le galet d'application précité (20) est monté sur une pièce (25a) actionnable par un vérin ou analogue (66) solidaire du chariot (8) pour ainsi exercer un effort d'application du joint (9) sur la surface réceptrice (10).

8. Dispositif selon l'une des revendications précédentes, **caractérisé en ce qu'**au gabarit (1) est associée une butée (28) suspendue et réglable apte à coopérer avec la carrosserie (4) du véhicule pour assurer le prépositionnement correct du gabarit (1) sur ladite carrosserie et, éventuellement, son entraînement.

9. Dispositif selon l'une des revendications précédentes, **caractérisé en ce que** le gabarit (1) est monté suspendu et roulant sur un rail (2) par l'intermédiaire de bras (3, 30a) dont l'un (30a) porte la butée précitée (28).

10. Dispositif selon l'une des revendications précédentes, **caractérisé en ce que** le gabarit (1) est maintenu accroché sur la carrosserie grâce à des pattes (32) coopérant avec le pavillon (4a) de la carrosserie (4).

11. Dispositif selon l'une des revendications précédentes, **caractérisé en ce que** le gabarit (1) est muni d'un moteur (33) d'entraînement du chariot (8) par l'intermédiaire d'une chaîne ou analogue (35).

12. Procédé de mise en oeuvre d'un dispositif selon l'une des revendications précédentes, **caractérisé en ce que** lorsque la butée précitée (28) a heurté une extrémité de la carrosserie (4), le gabarit précité (1) est plaqué et bridé sur le côté de ladite carrosserie et le chariot précité (8) est mis en mouvement sur le gabarit (1) tandis qu'une pression est exercée sur le galet d'application précité (20) pour fixer le joint (9) par collage sur la surface réceptrice (10).

13. Procédé selon la revendication 12, **caractérisé en ce que** le galet d'application précité (20) tourne plus vite qu'un simple roulage libre de ce galet sur le joint (9).

## Claims

1. Device for fixing a joint, such as a drip moulding joint, on a motor vehicle body, **characterised in that** it comprises :
- a jig (1) able to be placed in contact with the motor vehicle body (4),
- a carriage (8) born by the jig (1) and able to move on the latter so as to place the joint (9), and
- means for guiding and orientating the carriage (8) on the jig (1).

2. Device according to claim 1, **characterised in that** the means for guiding and orienting the carriage include three rails, possibly approximately parallel and having a circular cross section and which are integral with the jig (1), namely a first rail (11) with a shape matching the shape of the receiving surface (10) of the joint and defining the path the carriage (8) needs to follow along the vehicle body (4), a second rail (12) maintaining the force for applying the joint (9) on the receiving surface (10) of the joint along a direction still normal to the application surface of the joint, and a third rail (13) ensuring along a direction transversal to the vehicle a correct positioning of the carriage (8) with respect to the vehicle so that the joint (9) is fully flush with the geometry of the car body.

3. Device according to claim 1 or 2, **characterised in that** the carriage (8) includes the roller for guiding rollers(14, 15, 16) which bilaterally cooperate with respectively the first, second and third rails (11, 12, 13), the axes (14a) of the rollers (14) cooperating with the first rail (11) being orthogonal to the axes (15a) of the rollers (15) cooperating with the second rail (12), and the axes (16a) of the rollers (16) cooperating with the third rail (13) forming an angle (A) with the axes of (15a) of the rollers (15) cooperating with the second rail (12).

4. Device according to one of claims 1 to 3,
**characterised in that** said carriage (8) is formed of two elements, namely a first element (18) bearing the rollers (14, 15) associated with the first and second rails (11, 12) and a second element (19) bearing the rollers (16) associated with the third rail (13) and slanted with respect to the first element (18) along an angle equal to said angle (A)

5. Device according to claim 4, **characterised in that** said second element (19) is provided with a roller (20) for applying the joint (9) on the receiving surface (10), the axis (20a) of said roller being orthogonal to the axis (16a) of the rollers (16) associated with the third rail (13).

6. Device according to claim 5, **characterised in that** said the application roller (20) has a groove (21) cooperating with the joint (9) so as to apply it on the receiving surface (10) and is driven in rotation by a motor (23) integral with the carriage (8).

7. Device according to claim 5 or 6, **characterised in that** said application roller (20) is mounted on a piece (25a) able to be activated by a jack or the like (26) integral with the carriage (8) so as to exert a force for applying the joint (9) on the receiving surface (10).

8. Device according to one of the preceding claims, **characterised in that** the jig (1) is associated with a suspended and adjustable stop (28) able to cooperate with the body (4) of the vehicle so as to ensure the correct prepositioning of the jig (1) on said body and subsequently its drive.

9. Device according to one of the preceding claims, **characterised in that** the jig (1) is mounted suspended and rolling on a rail (2) by means of arms (3, 30a), one (30a) of said arms bearing said stop (28).

10. Device according to one of the preceding claims, **characterised in** the jig (1) is kept fastened on the body by means of brackets (32) cooperating with the top (4a) of the body (4).

11. Device according to one of the preceding claims, **characterised in that** the jig (1) is provided with a motor (33) for driving the carriage (8) by means of a chain or similar element (35).

12. Method for implementing a device according to one of the preceding claims, **characterised in that** when said stop (28) has struck one extremity of the body (4), said jig (1) is clad and flanged on the side of said body and said carriage (8) moves on the jig (1), whereas pressure is exerted on said application roller (20) so as to fix the joint (9) by means of glueing it on the receiving surface (10).

13. Method according to claim 12, **characterised in that** said application roller (20) rotates quicker than a mere free rolling of said roller on the joint (9).

## Patentansprüche

1. Vorrichtung zum Anbringen einer Dichtung, wie zum Beispiel einer Regenrinnendichtung, auf einer Fahrzeugkarosserie, **dadurch gekennzeichnet, dass** sie folgendes umfasst:
- ein Maß (1), das geeignet ist, mit der Fahrzeugkarosserie (4) in Kontakt gebracht zu werden;
- einen vom Maß (1) getragenen und dazu geeigneten Wagen (8), sich auf diesem zu verschieben, um das Aufsetzen der Dichtung (9) zu gewährleisten; und
- Führungs- und Ausrichtungsmittel des Wagens (8) auf dem Maß (1).

2. Vorrichtung gemäß Anspruch 1, **dadurch gekennzeichnet, dass** die Führungs- und Orientierungsmittel des Wagens drei ungefähr parallele oder nicht parallele Schienen mit querverlaufendem kreisförmigem Durchschnitt umfassen, die fest mit dem Maß (1) verbunden sind, nämlich eine erste Schiene (11) in mit der Form der Aufnahmefläche (10) der Dichtung verbundenen und die Bahn definierenden Form, welche der Wagen (8) entlang der Fahrzeugkarosserie (4) verfolgen muss, eine zweite Schiene (12), die die Anwendungskraft der Dichtung (9) auf der Aufnahmefläche (10) der Dichtung gemäß einer immer normalen Richtung zur Anwendungsfläche der Dichtung folgt, und eine dritte Schiene (13), die gemäß einer zum Fahrzeug querverlaufenden Richtung eine korrekte Positionierung des Wagens (8) im Verhältnis zum Fahrzeug gewährleistet, damit die Dichtung (9) perfekt bündig in die Geometrie der Karosserie eingelassen wird.

3. Vorrichtung gemäß Anspruch 1 oder 2, **dadurch gekennzeichnet, dass** der Wagen (8) Führungsrollen (14, 15, 16) umfasst, die bilateral jeweils mit der ersten, der zweiten und der dritten Schiene (11, 12, 13) zusammenwirken, wobei die mit der ersten Schiene (11) zusammenwirkenden Achsen (14a) der Rollen (14) orthogonal zur mit der zweiten Schiene (12) zusammenwirkenden Achse (15a) der Rollen (15) ist und die mit der dritten Schiene (13) zusammenwirkenden Achsen (16a) der Rollen (16) einen Winkel (A) mit den mit der zweiten Schiene (12) zusammenwirkenden Achsen (15a) der Rollen (15) bilden.

4. Vorrichtung gemäß Anspruch 1, 2 oder 3, **dadurch gekennzeichnet, dass** der vorgenannte Wagen (8) aus zwei Elementen besteht, nämlich einem die den ersten und zweiten Schienen (11, 12) zugeordnete Rollen (14, 15) tragenden ersten Element (18) und ein die der dritten Schiene (13) zugeordnete Rollen (16) tragendes zweites Element (19), das im Verhältnis zum ersten Element (18) gemäß eines dem vorgenannten Winkel (A) gleichen Winkels geneigt ist.

5. Vorrichtung gemäß Anspruch 4, **dadurch gekennzeichnet, dass** das zweite vorgenannte Element (19) mit einer Anwendungsrolle (20) der Dichtung (9) auf der Aufnahmefläche (10) versehen ist, wobei die Achse (20a) dieser Rolle orthogonal zur Achse (16a) der dritten Schiene (13) zugeordneten Rollen (16) ist.

6. Vorrichtung gemäß Anspruch 5, **dadurch gekennzeichnet, dass** die vorgenannte Anwendungsrolle (20) eine Auskehlung (21) besitzt, die mit der Dichtung (9) zusammenarbeitet, um ihre Anwendung auf die Aufnahmefläche (10) zu gewährleisten, und in Rotation durch einen fest mit dem Wagen (8) verbundenen Motor (23) angetrieben wird.

7. Vorrichtung gemäß Anspruch 5 oder 6, **dadurch gekennzeichnet, dass** die vorgenannte Anwendungsrolle (20) auf einem durch einen Zylinder oder dergleichen (26) betätigbaren, fest mit dem Wagen (8) verbundenen Stück (25a) angebracht ist, um somit eine Anwendungskraft der Dichtung (9) auf die Aufnahmefläche (10) auszuüben.

8. Vorrichtung gemäß einem der vorgenannten Ansprüche, **dadurch gekennzeichnet, dass** dem Maß (1) ein aufgehängter und einstellbarer Anschlag (28) zugeordnet ist, der geeignet ist, mit der Fahrzeugkarosserie (4) zusammenzuwirken, um die korrekte Vorpositionierung das Maßes (1) auf besagter Karosserie und eventuell ihren Antrieb zu gewährleisten.

9. Vorrichtung gemäß einem der vorgenannten Ansprüche, **dadurch gekennzeichnet, dass** das Maß (1) aufgehängt und rollend mittels Armen (3, 30a) auf einer Schiene (2) angebracht ist, von denen einer (30a) den vorgenannten Anschlag (28) trägt.

10. Vorrichtung gemäß einem der vorgenannten Ansprüche, **dadurch gekennzeichnet, dass** das Maß (1) mittels mit dem Dach (4a) der Karosserie (4) zusammenwirkenden Klauen (32) auf der Karosserie befestigt ist.

11. Vorrichtung gemäß einem der vorgenannten Ansprüche, **dadurch gekennzeichnet, dass** das Maß (1) mittels einer Kette oder dergleichen (35) mit einem Antriebsmotor (33) des Wagens (8) versehen ist.

12. Betriebsverfahren einer Vorrichtung gemäß einem der vorgenannten Ansprüche, **dadurch gekennzeichnet, dass**, das vorgenannte Maß (1) auf die Seite der besagten Karosserie plattiert und geflanscht wird und der vorgenannte Wagen (8) auf dem Maß (1) in Bewegung gesetzt wird, wenn der vorgenannte Anschlag (28) an ein Ende der Karosserie (4) gestoßen ist, während ein Druck auf die vorgenannte Anwendungsrolle (20) ausgeübt wird, um die Dichtung (9) durch Verkleben auf der Aufnahmefläche (10) zu fixieren.

13. Verfahren gemäß Anspruch 12, **dadurch gekennzeichnet, dass** die vorgenannte Anwendungsrolle (20) sich schneller dreht als ein einfaches freies Rollen dieser Rolle auf der Dichtung (9).
